# EUROPÄISCHE PATENTANMELDUNG

(11) **EP 0 908 377 A1**
(43) Veröffentlichungstag der Anmeldung: **14.04.1999**
(21) Anmeldenummer: 98117350.3
(22) Anmeldetag: 14.09.1998
(51) Int. Cl.: B62H 5/16

(54) **Schwenkbügelschloss mit Sperrarmverriegelung**

(30) Priorität: 13.10.1997 DE 19745202
(71) Anmelder: Aug. Winkhaus GmbH & Co. KG, D-48291 Telgte (DE)
(72) Erfinder: Kortenbrede, Ludger, 48291 Telgte (DE)
(74) Vertreter: Hoffmeister, Helmut, Dr. Dipl.-Phys.

(57) **Zusammenfassung**

Um die Bedienung einer lösbaren Drehsicherung zum Feststellen eines Sperrarms in der Lösestellung bei einer Schließvorrichtung zu verbessern, ist die Drehsicherung als Verriegelungseinheit (15) ausgebildet.
Sie weist
- einen drehbar angeordneten Verriegelungszapfen (154) mit einer wenigstens teilweise durchgehenden Zapfenabflachung (155), mit dem in einer Verriegelungsstellung das Schwenkgehäuse (14) an dem Schwenkbolzen (11) festgelegt ist, und
- einem Entriegelungshebel (153), mit dem der Verriegelungszapfen (154) soweit verdrehbar ist, daß in einer Freigabestellung die Zapfenabflachung (155) dem Schwenkbolzen (11) gegenübersteht und der Sperrarm (7) in die Sperrstellung führbar ist,
auf.

## Beschreibung

Die Erfindung betrifft eine Schließvorrichtung zum Sperren eines Speichenrades, die an zwei sich gegenüberliegenden Streben einer Gabel eines Zweirades angebracht sind und die umfaßt
- eine an der ersten Strebe angeordnete Halteeinheit mit wenigstens
   . einem beweglichen Schwenkgehäuse mit einem Sperrarm, das um einen Schwenkbolzen zwischen einer Lösestellung des Sperrarms parallel zur ersten Strebe und einer Sperrstellung verstellbar ist und
   . einer lösbaren Drehsicherung zum Festlegen des Sperrarms in der Lösestellung und
- eine an der zweiten Strebe angeordnete Eingriffseinheit mit wenigstens einer Schließeinheit, die von einer Gehäuseeinheit umgeben ist, und einer Gehäusebohrung, mit der die Gehäuseeinheit versehen ist und in die das freie Ende des Sperrarms einführbar und mit Hilfe der Schließeinheit sperrbar ist.

Eine Schließvorrichtung der eingangs genannten Art zum Sperren eines Speichenrades, das in einer Gabel eines Zweirades angebracht ist, ist aus der DE-C-3 344 169 bekannt. Sie besteht aus einem Halteteil, das fest mit einem Schenkel der Gabel verbunden ist und in dem ein Sperrarm in einer Buchse angeordnet ist. Die Buchse ist um eine Achse schwenkbeweglich zwischen einer Lösestellung parallel zum Gabelschenkel und einer Sperrstellung schwenkbeweglich angeordnet. Der Sperrarm ist mit einer Drehsicherung in dar Lösestellung festgelegt. Das Eingriffselement auf dem anderen Schenkel der Gabel weist eine Aussparung auf, in die der Sperrarm einführbar und mit Hilfe einer Sperreinrichtung sperrbar ist.

Nachteilig ist, daß der Sperrarm bei einem Verschwenken aus der Löse- in die Sperrstellung für eine Freigabe der Drehsicherung zuerst in Richtung der Lösestellung gedrückt werden muß, damit er anschließend verschwenkt werden kann. Hierbei wird der Sperrarm so weit durchgedrückt, daß er beim Schwenken in die Schließstellung an der Buchse anschlägt. Erst durch ein leichtes Zurücksetzen des Sperrarms ist es möglich, ihn vor der Öffnung des Eingriffselements zu positionieren. Erst nach diesem Positionieren ist ein Einführen des Sperrarms in die Öffnung und sein anschließendes Versperren möglich.

Aus der DE-A-3 212 816 ist ein Schwenkbügelschloß für Zweiradfahrzeuge bekannt. Es umfaßt ein an einem Fahrzeugrahmenteil seitlich neben dem mit einer Druchbrechung versehenen Rad angeordnetes Schwenklager, ein an einem weiteren Fahrzeugrahmenteil auf der anderen Seite des Rades dem Schwenklager gegenüberliegend angeordnetes Gegenlager und einen Schwenkbügel, der am Schwenklager zum einen zum Lösen seiner Drehsicherung um seine Längsachse drehbar gelagert ist und der zum anderen um eine Schwenkachse schwenkbar ist.

Nachteilig ist, daß nur mit Hilfe einer durch einen Schlüssel freigegebenen Schließeinheit die Löse- und Schwenkbewegung des Schwenkbügels durchführbar ist. Hierdurch werden Schließeinheit und Schlüssel stark belastet. Weiterhin behindert der Schlüssel die Durchführung der Bewegungen.

Weiterhin ist in der CH-A-680 356 ein Drehriegelschloß, insbesondere für Zweiradfahrzeuge beschrieben. An einem Gabelschenkel einer Gabel ist ein Schloßgehäuse mit einer Schließeinheit angebracht, mit dem ein Sperrbolzen von einer Freigabe- in eine Sperrstellung schwenkbar ist. An einem gegenüberliegenden Gabelschenkel der Gabel ist ein Rasthaken angebracht, in der der Sperrbolzen in der Sperrstellung blockiert wird. Im Schloßgehäuse ist mit der Schließeinrichtung ein Riegel vorgesehen. Dieser legt über die Schließeinrichtung den Sperrbolzen fest, der nur mit Hilfe eines Betätigungsstiftes freigegeben wird.

Aus der CH-C 83 616 ist ein Fahrradschloß zur Sperrung des Hinterrades eines Fahrrades bei dessen Nichtgebrauch bekannt. An der hinteren Radgabel wird jeweils ein Gehäuse befestigt. In einem Gehäuse ist ein rechteckiger Drehzapfen für eine Sperrstange festgenietet. Das Ende der Sperrstange ist gerundet, liegt kraftschlüssig an einer Feder an und hat eine kreisrunde Ausnehmung. Wird die Sperrstange in eine Sperrstellung verstellt, dreht sich die kreisrunde Ausnehmung um den rechteckigen Drehzapfen und rastet in das andere Gehäuse ein. Die Verrastung ist nur mit Hilfe einer Schließeinrichtung lösbar. An die kreisrunde Aussparung schließt sich eine rechteckige Ausnehmung an. In seiner Lösestellung drückt die Feder den rechteckigen Drehzapfen in die rechteckige Ausnehmung und legt damit den Sperrarm fest.

Nachteilig ist, daß nur durch ein Ergreifen des Sperrarms dessen Bewegungen durchführbar sind. Um den Sperrarm aus seiner Verriegelungsstellung lösen zu können, muß der Widerstand der Feder so weit überwunden werden, daß der Drehzapfen in die kreisrunde Ausnehmung gelangt. Erst danach ist er in die Sperrstellung verschwenkbar. Hierbei besteht die Gefahr des Verschmutzens und Verletzens am Hinterrad sowie am Rahmen des Fahrrades.

Letztendlich ist aus der US-A-4 180 998 ein Fahrradschloß bekannt, bei dem an einem Gabelschenkel eines Fahrrades ein Halte- und an einem gegenüberliegenden Gabelschenkel ein Eingriffsteil mit einer Ausnehmung angeordnet ist. Das Halteteil weist ein Gehäuse auf, das um einen mit dem Gabelschenkel verbundenen Bolzenstummel verdrehbar ist. Der Bolzenstummel weist eine teilkreisförmige Vertiefung auf. Im Gehäuse ist ein Sperrarm mit einem Schließzylinder drehbar gehalten. Der Sperrarm ist im Bereich der Vertiefung des Bolzenstummels mit einer Abschrägung versehen. An dem dem Schließzylinder gegenüberliegenden Ende weist der Sperrarm eine U-förmige Ausfräsung zum Eingreifen in die Ausnehmung des Eingriffsteils auf.

Allerdings bildet die Abflachung am Sperrarm im Zusammenwirken mit der Vertiefung im Bolzenstummel keine Drehsicherung des Sperrarms in der Lösestellung, sondern den Verschließmechanismus des Fahrradschlosses aus. Denn wenn der Sperrarm aus dem Eingriffsteil aus seiner Sperrstellung gelöst werden soll, muß mit einem Schlüssel über den Schließzylinder der Sperrarm soweit verdreht werden, daß die Abflachung der Vertiefung gegenübersteht. Erst danach kann der Sperrarm in die Lösestellung geschwenkt und das Hinterrad des Fahrrades freigegeben werden. In der Lösestellung sorgt ein Anschlagen der Abflachung an den Bolzenstummel im Bereich der Vertiefung nur für eine definierte Endstellung in Richtung parallel zum Gabelschenkel.

Es stellt sich deshalb die Aufgabe, bei einer Schließvorrichtung der eingangs genannten Art die Drehsicherung, insbesondere deren Bedienung, zu verbessern.

Erfindungsgemäß wird diese Aufgabe dadurch gelöst, daß die Drehsicherung als Verriegelungseinheit ausgebildet ist, die wenigstens aufweist
- einen drehbar angeordneten Verriegelungszapfen mit einer wenigstens teilweise durchgehenden Zapfenabflachung, mit dem in einer Verriegelungsstellung das Schwenkgehäuse an dem Schwenkbolzen festgelegt ist, und
- einem Entriegelungshebel, mit dem der Verriegelungszapfen soweit verdrehbar ist, daß in einer Freigabestellung die Zapfenabflachung dem Schwenkbolzen gegenübersteht und der Sperrarm in die Sperrstellung führbar ist.

Die mit der Erfindung erzielten Vorteile bestehen insbesondere darin, daß das Teil, das den Sperrarm von der Löse- in die Sperrstellung verschwenkt, gegenüber wenigstens einem feststehenden Teil der Halteeinheit durch den drehbar gehaltenen Verriegelungszapfen festgelegt wird. Erst mit einem Entriegelungshebel, der unabhängig vom drehbeweglichen Teil der Halteeinheit ist, wird der Verriegelungszapfen so weit verschwenkt, daß er die Blockade des Schwenkgehäuses freigibt, so daß der Sperrarm in seine Sperrstellung verschwenkbar ist. Dadurch, daß die Entriegelung und die Verschwenkung des Sperrarms durch voneinander unabhängigen Funktionsteilen vorgenommen wird, ist eine sichere Lösestellung des Sperrarms gewährleistet. Hierdurch wird ein unbeabsichtigtes Verschwenken des Sperrarms während der Fahrt vermieden, die zu einer Blockade des Hinterrads und dessen Beschädigung und darüber hinaus zu einer Verletzung des Fahrers des Zweirades führen kann.

Das Zusammenwirken des Entriegelungshebels mit dem Entriegelungszapfen kann in zwei Ausführungsformen realisiert werden.

In der ersten Ausführungsform ist der Entriegelungshebel direkt mit dem Verriegelungszapfen verbunden. Hierdurch wird jede Änderung der Verstellung des Entriegelungshebels unmittelbar auf den Verriegelungszapfen übertragen.

In der zweiten Ausführungsform ist der Entriegelungshebel über ein Getriebe mit dem Verriegelungszapfen verbunden. Der Vorteil dieser Ausführungsvariante besteht insbesondere darin, daß das Getriebe als stellungsübertragendes System im Inneren der Halteeinheit untergebracht werden kann. Hierdurch wird ein Verschmutzen der beweglichen Teile der Halteeinheit vermieden.

Das Getriebe kann aus einer Verriegelungsverzahnung, die mit dem Entriegelungshebel verbunden ist, und aus einem Zahnkranz, der mit dem Verriegelungszapfen verbunden ist, bestehen. Der Zahnkranz kann entweder als Zahnrad ausgebildet sein, das auf dem Verriegelungszapfen angeordnet ist. Es kann aber auch als Zahnradsegment ausgebildet sein, das am Verriegelungszapfen angeordnet ist. Beide Ausführungsvarianten sichern eine exakte Übertragung der Bewegungsänderungen auf den Verriegelungszapfen, der vom Entriegelungshebel ausgeht.

Die Verriegelungsverzahnung kann ein Kreissegment mit einer Innenverzahnung sein, die Teil eines mit dem Entriegelungshebel verbundenen Abdeckgehäuses sein kann. Hierbei bewegt sich bei Betätigung des Entriegelungshebels das Abdeckgehäuse wie ein auf einem Topf verdrehbarer Deckel. Die Verriegelungsverzahnung kann ein Zahnradsegment sein, das in einem Drehpunkt des Schwenkkörpers angeordnet sein kann. Hierdurch entsteht ein Betätigungshebel zwischen der Verriegelungsverzahnung und dem Entriegelungshebel, die dessen Betätigung erleichtert.

Wenigstens eine der Endstellungen des Schwenkbügels kann durch einen Anschlag begrenzt sein. Der Anschlag kann durch eine Ausnehmung oder durch Segmente realisiert sein. Hierdurch ist es möglich, den Schwenkbügel um einen bestimmten Winkel zu verschwenken. Überraschenderweise wurde gefunden, daß ein Schwenkwinkel von 19° eine exakte und genaue Verschwenkung des mit der Zapfenabflachung versehenen Verriegelungszapfens sichert.

In der Zeichnung ist der Erfindungsgegenstand dargestellt und wird im folgenden näher beschrieben. Es zeigen
- Fig. 1a: ein Schwenkbügelschloß mit Sperrarmverriegelung im angebauten Zustand mit einem Sperrarm in einer Lösestellung in einer schematischen, perspektivischen Darstellung,
- Fig. 1b: ein Schwenkbügelschloß mit Sperrarmverriegelung im angebauten Zustand mit einem Sperrarm in einer Sperrstellung in einer schematischen, perspektivischen Darstellung,
- Fig. 2: eine Halteeinheit eines Schwenkbügelschlosses gemäß den Fig. 1a und 1b mit einer Verriegelungseinheit in einer ersten Ausführungsform in einer schematischen Schnittdarstellung,
- Fig. 3: einen Schnitt durch eine Halteeinheit gemäß Fig. 2 entlang der Linie III - III,
- Fig. 4: einen Schnitt durch eine Halteeinheit gemäß Fig. 2 entlang der Linie IV - IV,
- Fig. 5: einen Schnitt durch eine Halteeinheit gemäß Fig. 2 entlang der Linie V - V,
- Fig. 6: eine Halteeinheit eines Schwenkbügelschlosses gemäß den Fig. 1a und 1b mit einer Verriegelungseinheit in einer Zweiten Ausführungsform in einer schematischen Schnittdarstellung,
- Fig. 7: einen Schnitt durch eine Halteeinheit gemäß Fig. 6 entlang der Linie VII - VII,
- Fig. 8: einen Schnitt durch eine Halteeinheit gemäß Fig. 6 entlang der Linie VIII - VIII und
- Fig. 9: eine Halteeinheit eines Schwenkbügelschlosses gemäß den Fig. 1a und 1b mit einer Verriegelungseinheit in einer dritten Ausführungsform in einer schematischen Schnittdarstellung.

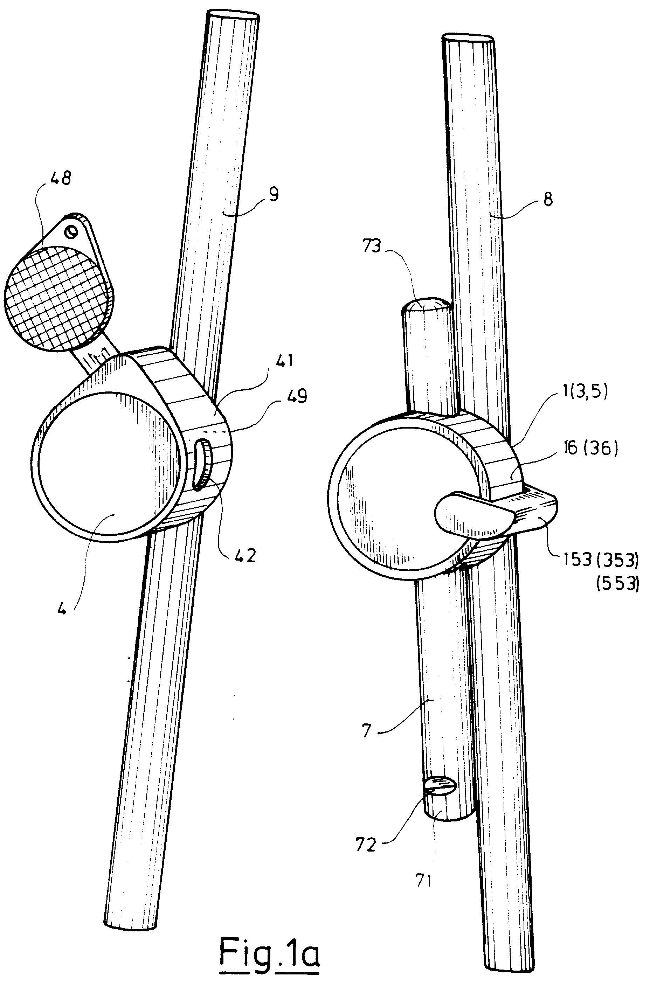

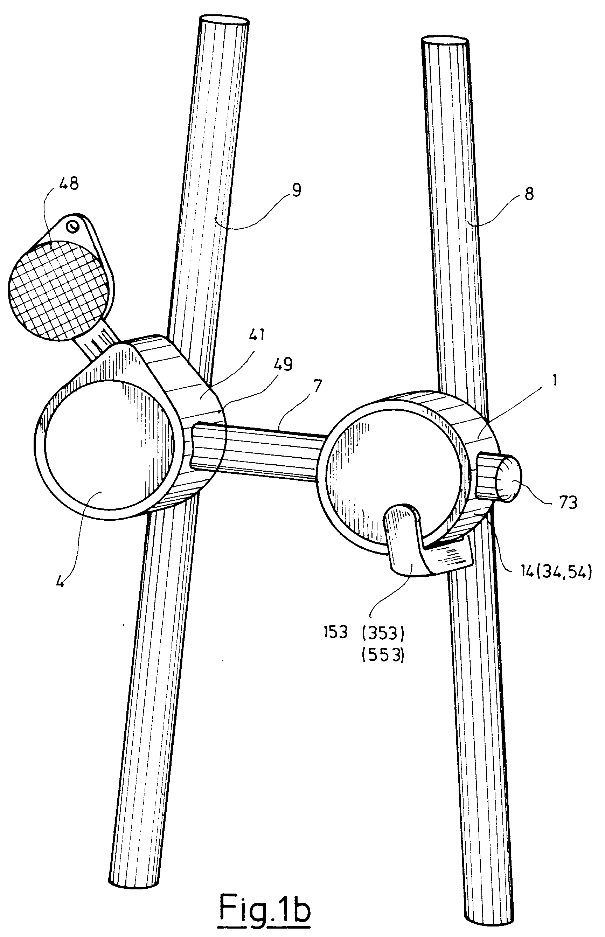

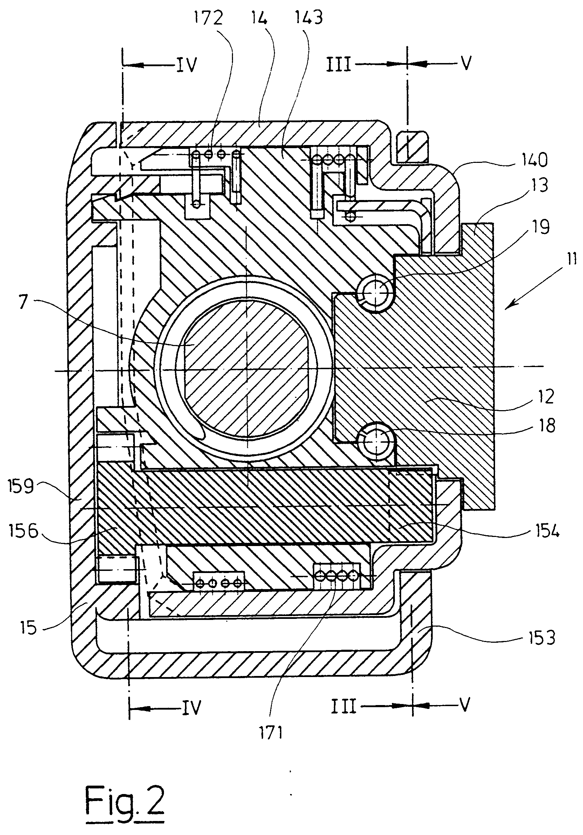

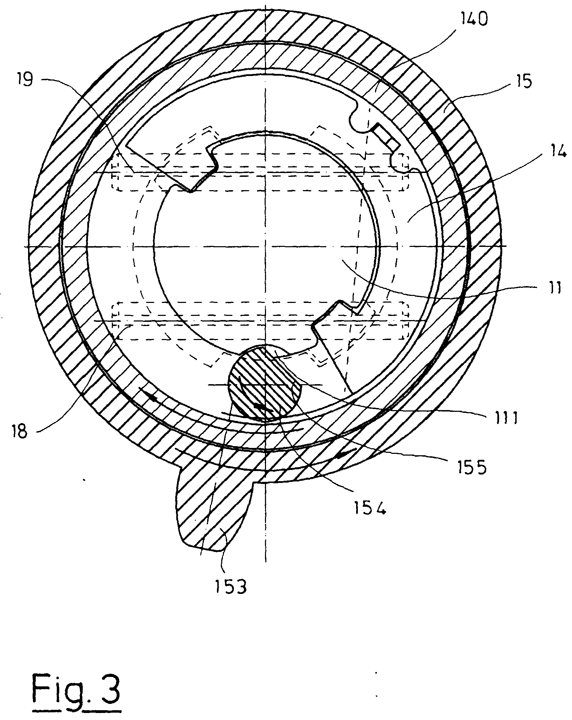

Ein Schwenkbügelschloß besteht, wie die Fig. 1a und 1b zeigen, aus
- einer Halteeinheit 1, 3 oder 5 mit
- einem Sperrarm 7 und
- einer Eingriffseinheit 4.

Die Halteeinheit 1, 3 oder 5 und die Eingriffseinheit 4 sind an zwei sich gegenüberliegenden Streben einer Gabel eines Zweirades angebracht. Sie können an den Enden eines U-förmig ausgebildeten Bügels befestigt sein.

Wie die Fig. 1a und 1b zeigen, sind sie an zwei sich gegenüberliegenden Gabelschenkeln 8, 9 eines Fahrradrahmens befestigt, zwischen denen ein Hinterrad umläuft. Hierbei ist die Halteeinheit 1, 3 oder 5 an dem Gabelschenkel 8 und die Eingriffeinheit 4 an den Gabelschenkeln 9 angeordnet.

Die Halteeinheit 1 mit einer Verriegelungseinheit 15 ist in den Fig. 2, 3 und 4 dargestellt.

Die Halteeinheit 1 weist einen Schwenkbolzen 11 auf, der aus einer kreisförmigen Schwenkplatte 13 besteht, die in einen stufenförmig und zylinderförmig ausgebildeten Schwenkzapfen 12 übergeht. Der Schwenkbolzen 11 ist mit seiner flachen Außenseite der Schwenkplatte 13 an dem Gabelschenkel 8 befestigt.

An dem Schwenkbolzen 11 ist drehbeweglich ein Schwenkgehäuse 14 gehalten. Es besteht aus einem Verstellkörper 143, der mit Halteelementen 18, 19 an dem Schwenkzapfen 12 gehalten wird. Der Verstellkörper 143 ist kraftschlüssig mit einem Außengehäuse 140 verbunden. Das Außengehäuse 140 ist topfähnlich ausgebildet. Seine offene Seite wird ähnlich einem Deckel durch ein Abdeckgehäuse 159 der Entriegelungseinheit 15 abgedeckt.

Das deckelförmige Abdeckgehäuse 159 setzt sich in einen Entriegelungshebel 153 fort, der im Bereich des Schwenkbolzens 11 das Außengehäuse 140 umgibt. Hierdurch ist das Abdeckgehäuse 159 mit dem Entriegelungshebel 153 um das Außengehäuse 140 des Schwenkgehäuse 14 verdrehbar. Das Außengehäuse 140 und der Verstellkörper 143 des Schwenkgehäuses 14 sind, wie auch die Fig. 1a und 1b zeigen, von dem Sperrarm 7 durchzogen.

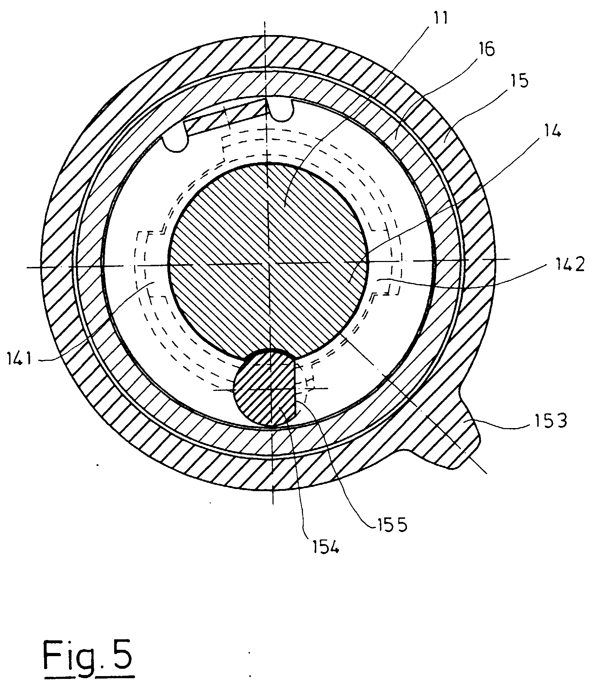

Wesentlich ist, daß die Verriegelungseinheit 15 einen drehbar gelagerten Verriegelungszapfen 154 umfaßt. Der Verriegelungszapfen 154 beginnt am Schwenkzapfen 12 der Schwenkbolzen 11. Der Schwenkzapfen 12 weist in diesem Bereich eine teilkreisförmige Verriegelungsausnehmung 111 auf. Der Verriegelungszapfen 154 ist, wie die Fig. 3 und 5 weiterhin zeigt, mit einer Zapfenabflachung 155 versehen. Sie erstreckt sich über die mittlere der Stufe des Schwenkzapfens 12. Dadurch, daß der übrige Teil des Verriegelungszapfens 154 zylinderförmig ausgebildet ist, ist dessen sichere Führung in dem Verstellkörper 143 gewährleistet. Es ist aber nicht ausgeschlossen, daß sich die Zapfenabflachung 155 über die ganze Länge des Entriegelungszapfens 154 erstrecken kann.

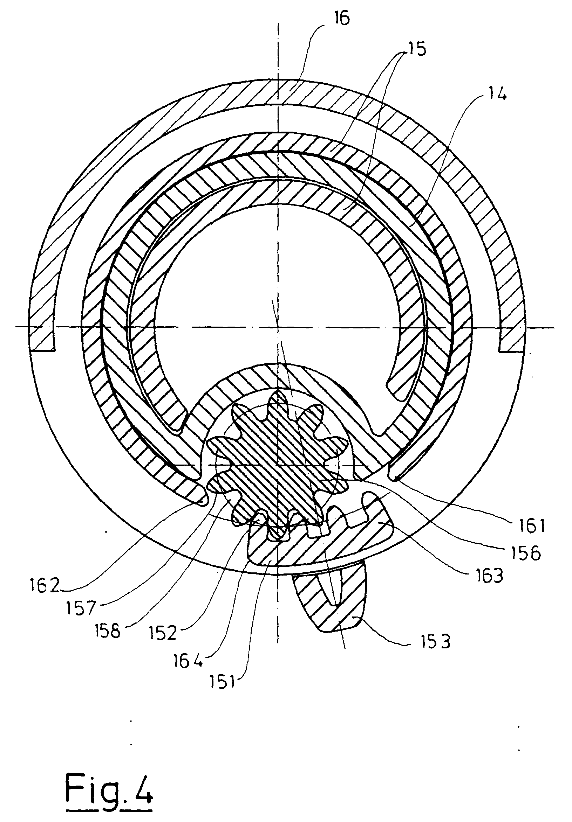

Auf dem Verriegelungszapfen ist, wie Fig. 2 und 4 zeigen, ein Zahnkranz 156 aufgesetzt, der frei beweglich unter dem Abdeckgehäuse 159 endet. Der Zahnkranz ist als Zahnrad mit Zapfenzähnen 157 und zwischen denen liegenden Zapfenzahnlücken 158 ausgebildet.

Dem Zahnkranz 156 liegt eine Verriegelungsverzahnung 151 mit Verriegelungszähnen 152, zwischen denen Verriegelungszahnlücken angeordnet sind, gegenüber. Die Verriegelungsverzahnung 151 und der Zahnkranz 156 bilden ein Getriebe, das durch den Entriegelungshebel 153 betätigbar ist. Der Zahnkranz 156 bewegt sich in einem teilkreisförmigen Zylinderelement, das durch Anschlagwandelemente 163, 164 gekennzeichnet ist. Diese arbeiten zusammen mit Anschlagbegrenzungselementen 161, 162. Rückholelemente in Form einer Entriegelungsrückholfeder 172 und einer Schwenkrückholfeder 172 sorgen dafür, daß die Verriegelungseinheit 15 und die Eingriffseinheit 4 mit dem Sperrarm 7 selbstätig die Verriegelungs- bzw. Lösestellung einnehmen.

Der Sperrarm 7 ist, wie Fig. 1a zeigt, an einem aus dem Schwenkgehäuse 14 herausragenden Ende mit einem Schließschlitz 71 und einer Schließbohrung 72 versehen. Sein gegenüberliegendes Ende ist als Betätigungsende 73 gekennzeichnet.

Die Eingriffseinheit 4 besteht, wie die Fig. 1a und 1b zeigen, aus einem Schloßgehäuse 41, das eine blumentopfähnliche oder tropfenähnliche Konfiguration hat. Es weist eine Gehäusebohrung 42 auf und ist Träger einer Schließeinheit, die wenigstens aus einem Schließzylinder 49 und einem sie betätigenden Schlüssel 48 besteht. Der Schließzylinder kann mit einem vorgespannten Verschlußkörper zusammenarbeiten, der durch den Schließschlitz 71 des Sperrarms geführt und sich nach dem Entriegeln in der Schließbohrung 72 festlegt. Hierdurch entsteht eine Versperrebene, die im rechten Winkel zum Sperrarm 7 in dessen Sperrstellung liegt. Die Sicherheit des Schlosses wird darüber hinaus dadurch erhöht, daß der Schließzylinder 49 einen Winkel zum Sperrarm 7 in dessen Sperrstellung einschließt, so daß die Schließebene gegenüber der Verschlußebene abgewinkelt ist. Hierdurch wird ein sicheres und bedienungsfreundliches Betätigen des Schließzylinders 49 gewährleistet.

Die Arbeitsweise des Schwenkbügelschlosses mit der Verriegelungseinheit 15 als Sperrarmverriegelung wird anhand der Fig. 1a, 1b, 2, 3, 4 und 5 erläutert.

Gemäß Fig. 1a befindet sich der Sperrarm 7 in seiner Lösestellung. Gleichfalls befindet sich, wie Fig. 5 zeigt, der Verriegelungszapfen 154 in seiner Verriegelungsstellung, in dem er mit seinem zylinderförmigen Teil in die Verriegelungsausnehmung 111 eingreift. Hierdurch wird der Sperrarm 7 festgelegt und kann nicht durch Erschütterungen bzw. ein ungewolltes Betätigen in die Speichen des Hinterrades eingreifen.

Zur Entriegelung des Sperrarms 7 wird der Entriegelungshebel 153 wie Fig. 3 zeigt nach rechts und auf die Fig. 1a bezogen nach oben bewegt. Diese Bewegung wird von der Verriegelungsverzahnung 151 auf den Zahnkranz 156 übertragen. Bei dieser Bewegung dreht sich der Verriegelungszapfen 154 mit seiner Zapfenabflachung 155 parallel zum Schwenkbolzen 11 und aus der Verriegelungsausnehmung 111 heraus. Die Bewegung des Entriegelungshebels 153 wird durch die Berührung des Anschlagbegrenzungselements 161 mit der Anschlagwandung 163 begrenzt. Durch diese Begrenzung ist ein Anheben um 19° möglich.

Ist das Schwenkgehäuse 14 freigegeben, wird mit ihm der Sperrarm 7 aus der Löse- in die Sperrstellung geschwenkt. Die in den Fig. 3 und 5 gestrichelten Schwenkkörpersegmente 141, 142 sorgen dafür, daß der Sperrarm 7 mit seinen Schließschlitz 71 der Gehäusebohrung 42 gegenübersteht. Durch ein Drücken auf sein Betätigungsende 73 wird, wie Fig. 1b zeigt, der Sperrarm 7 in die Gehäusebohrung 42 eingeschoben und dort wie bereits beschrieben verriegelt. In dieser Stellung ruht der nichtbetätigte Entriegelungszapfen mit seiner Zapfenabflachung 155 auf der Außenwandung des Schwenkbolzens 11.

Wird mit Hilfe des Schlüssels 48 der Schließzylinder 49 betätigt und der Sperrarm 7 freigegeben, sorgen die Rückholfedern 171, 172 dafür, daß der Sperrarm 7 aus der Sperrstellung gemäß Fig. 1b in die Lösestellung gemäß Fig. 1a verschwenkt. Der Verriegelungszapfen 154 gelangt hierbei wieder in die Verriegelungsausnehmung 111 und nimmt seine Verriegelungsstellung gemäß Fig. 5 ein, so daß die Sperrarmverriegelung voll wirksam ist.

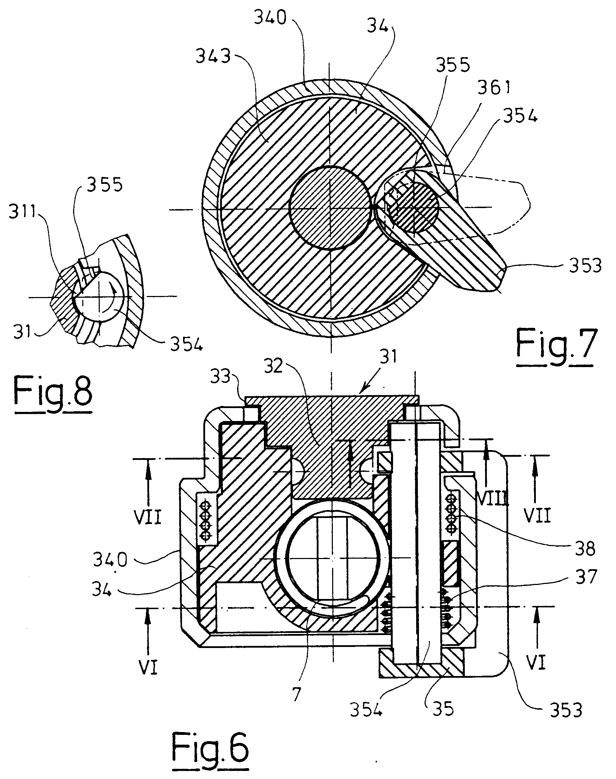

In den Fig. 6, 7 und 8 ist eine Halteeinheit 3 mit einer Verriegelungseinheit 35 gezeigt.

Die Halteeinheit 3 ist analog der Halteeinheit 1 an dem Gabelschenkel 8 befestigt. Sie besteht aus einem Schwenkbolzen 31 mit einer Schwenkplatte 33, die in einen stufenförmig ausgebildeten Schwenkzapfen 32 mit halbkreisförmigen Ausnehmungen übergeht.

An dem Schwenkbolzen 31 ist ein Schwenkgehäuse 34 gehalten, das aus einem Innengehäuse 343 und einem Außengehäuse 340 besteht. Im Schwenkgehäuse 34 wird der Sperrarm 7 gehalten.

Die Verriegelungseinheit 35 besteht aus einem Entriegelungshebel 353, der direkt mit dem Verriegelungszapfen 354 verbunden ist. Der Verriegelungszapfen 354 weist insbesondere im Bereich des Schwenkbolzens 31, wie Fig. 8 zeigt, eine Zapfenabflachung 355 auf. In den Schwenkbolzen 31 ist eine Verriegelungsausnehmung 311 eingebracht. Zum Zurückholen der Verriegelungseinneit 35 in die Verriegelungsstellung und die Halteeinheit mit dem Sperrarm 7 in dessen Sperrstellung ist eine Entriegelungsrücknolfeder 37 und eine Schwenkrückholfeder 38 vorgesehen. Die Halteeinheit 3 ist im übrigen wie die Halteeinheit 1 aufgebaut und arbeitet mit der Eingriffseinheit 4 zusammen.

Die Arbeitsweise der Halteeinheit 3 mit der Verriegelungseinheit 35 wird anhand der Fig. 1a, 1b, 6, 7 und 8 näher erläutert.

Befindet sich der Sperrarm 7 in seiner Lösestellung gemäß Fig. 1a, wird der Entriegelungshebel 353 in einer Schwenkbügelausnehmung 361 einseitig gehalten. Durch ein Bewegen des Entriegelungshebels 351 nach oben bzw. gemäß Fig. 8 in Pfeilrichtung entgegen dem Uhrzeigersinn, löst sich der Verriegelungszapfen 354 aus der Verriegelungsausnehmung 311 und wendet seine Zapfenabflachung 355 dem Schwenkbolzen 31 zu. Die Schwenkbügelausnehmung 361 begrenzt dabei die Bewegung des Entriegelungshebels um 19°. Damit wird das Schwenkgehäuse 34 gegenüber dem Schwenkbolzen 31 freigegeben, so daß der Sperrarm 7 aus der entriegelten Lösestellung in die Sperrstellung verschwenkt werden kann. Das Halten und Verschließen des Sperrarms 7 in der Eingriffseinheit 4 erfolgt in gleicher Art und Weise, wie es bereits bei der Halteeinheit 1 mit deren Verriegelungseinheit 15 beschrieben worden ist.

Wird mit Hilfe des Schlüssels 48 der Sperrarm 7 freigegeben, sorgen die Rücknolfedern 37, 38 dafür, daß der Sperrarm in die Lösestellung verschwenkt wird und darüber hinaus der Verriegelungszapfen 354 in die Verriegelungsausnehmung 311 eingeschwenkt wird. Damit ist das Schwenkgehäuse 34 wieder am Schwenkbolzen 31 festgelegt und der Schwenkarm 7 verriegelt.

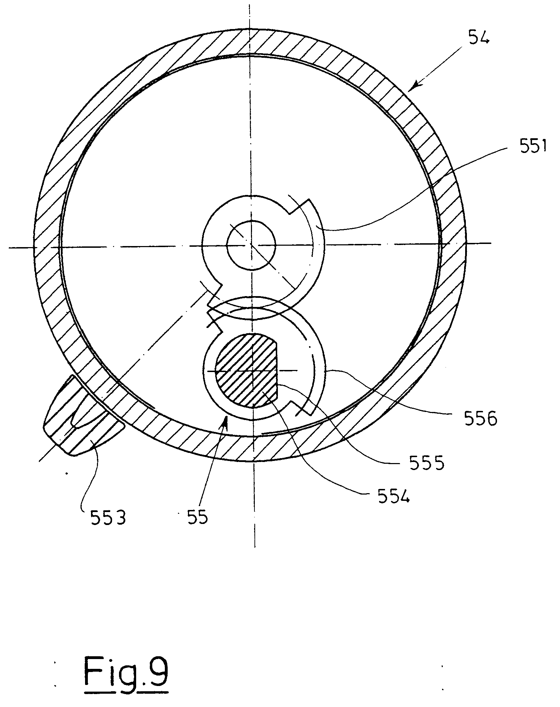

In Fig. 9 ist für eine Halteeinheit 5 mit einem Schwenkkörper 54, die analog der Halteeinheit 1 aufgebaut ist, mit einer Verriegelungseinheit 55 gezeigt. Sie besteht aus einem Verriegelungszapfen 554 mit einer Zapfenabflachung 555, die eine Zapfenverzahnung 556 aufweist. Der Zapfenverzahnung 556 steht eine Verriegelungsverzahnung 551 gegenüber, die im Drehpunkt des Schwenkkörpers 54 angeordnet ist. Sie ist kraftschlüssig mit einem Entriegelungshebel 553 verbunden. Die Entriegelungsverzahnung 551 und die Zapfenverzahnung 556 sind als halbkreisförmige Zahnkränze ausgebildet und bilden damit eine zweite Ausführungsform eines Getriebes.

Das Verschwenken des Verriegelungszapfens 554 aus seiner Verriegelungsstellung wird durch eine Drehung des Entriegelungshebels 553 entgegen dem Uhrzeigersinn vorgenommen. Hierbei wird diese Drehbewegung über das Getriebe 551, 556 auf den Verriegelungszapfen 554 übertragen. Der Entriegelungszapfen verdreht dabei seine Zapfenabflachung 555 so weit, daß sein Schwenkkörper 54 freigegeben wird und eine Verschwenkung des Sperrarms 7 von der Löse- in die Sperrstellung und sein Verschließen gemäß Fig. 1b möglich ist. Wird der Sperrarm 7 aus seiner Sperrstellung gemäß Fig. 1b durch Betätigung des Schlüssels 48 freigegeben, sorgen auch hier die Rückholfedern dafür, daß der Sperrarm 7 aus den Speichen des Hinterrades heraus in seine Lösestellung verschwenkt wird. Gleichzeitig bewegt sich der Verriegelungszapfen 554 mit seiner Rundung wieder in die Verriegelungsausnehmung zurück und verriegelt den Sperrarm 7 gegen ungewolltes Betätigen.

### Bezugszeichenliste

- 1, 3, 5: Halteeinheit
- 4: Eingriffseinheit
- 7: Sperrarm
- 8, 9: Gabelschenkel
- 11: Schwenkbolzen
- 111: Verriegelungsausnehmung
- 12: Schwenkzapfen
- 13: Schwenkplatte
- 14: Schwenkgehäuse
- 140: Außengehäuse
- 141, 142: Schwenkkörpersegment
- 143: Verstellkörper
- 15: Verriegelungseinheit
- 151: Verriegelungsverzahnung
- 152: Entriegelungszahn
- 153: Entriegelungshebel
- 154: Verriegelungszapfen
- 155: Zapfenabflachung
- 156: Zahnkranz
- 157: Zapfenzahn
- 158: Zapfenzahnlücke
- 159: Abdeckgehäuse
- 161, 162: Anschlagbegrenzungselement
- 163, 164: Anschlagwandung
- 171: Entriegelungsrückholfeder
- 172: Schwenkrückholfeder
- 18, 19: Halteelement
- 31: Schwenkbolzen
- 311: Verriegelungsausnehmung
- 32: Schwenkzapfen
- 33: Schwenkplatte
- 34: Schwenkgehäuse
- 340: Außengehäuse
- 343: Innengehäuse
- 35: Verriegelungseinheit
- 353: Entriegelungshebel
- 354: Verriegelungszapfen
- 355: Zapfenabflachung
- 361: Schwenkbügelausnehmung
- 37: Entriegelungsrückholfeder
- 38: Schwenkrückholfeder
- 41: Schloßgehäuse
- 42: Gehäusebohrung
- 48: Schlüssel
- 49: Schließzylinder
- 54: Schwenkkörper
- 55: Verriegelungseinheit
- 551: Entriegelungsverzahnung
- 553: Entriegelungshebel
- 554: Verriegelungszapfen
- 555: Zapfenabflachung
- 556: Zapfenverzahnung
- 71: Schließschlitz
- 72: Schließbohrung
- 73: Betätigungsende

## Patentansprüche

1. Schließvorrichtung zum Sperren eines Speichenrades, die an zwei sich gegenüberliegenden Streben (Gabelschenkel 8, 9) einer Gabel eines Zweirades angebracht sind und die umfaßt
- eine an der ersten Strebe (8) angeordnete Halteeinheit (1; 3; 5) mit wenigstens
. einem beweglichen Schwenkgehäuse (14; 34; 54) mit einem Sperrarm (7), das um einen Schwenkbolzen (11; 31) zwischen einer Lösestellung des Sperrarms (7) parallel zur ersten Strebe (8) und einer Sperrstellung verstellbar ist und
. einer lösbaren Drehsicherung (15; 35; 55) zum Festlegen des Sperrarms (7) in der Lösestellung und
- eine an der zweiten Strebe (9) angeordnete Eingriffseinheit (4) mit wenigstens einer Schließeinheit (48, 49), die von einer Gehäuseeinheit (41) umgeben ist, und einer Gehäusebohrung (42), mit der die Gehäuseeinheit (4) versehen ist und in die das freie Ende (71, 72) des Sperrarms (7) einführbar und mit Hilfe der Schließeinneit (48, 49) sperrbar ist,
dadurch gekennzeichnet, daß die Drehsicherung als Verriegelungseinneit (15; 35; 55) ausgebildet ist, die wenigstens aufweist
- einen drehbar angeordneten Verriegelungszapfen (154; 354; 554) mit einer wenigstens teilweise durchgehenden Zapfenabflachung (155; 355; 555), mit dem in einer Verriegelungsstellung das Schwenkgehäuse (14; 34; 54) an dem Schwenkbolzen (11; 31) festgelegt ist, und
- einem Entriegelungshebel (153; 353; 553), mit dem der Verriegelungszapfen (154; 354; 554) soweit verdrehbar ist, daß in einer Freigabestellung die Zapfenabflachung (155; 355; 555) dem Schwenkbolzen (11; 31) gegenübersteht und der Sperrarm (7) in die Sperrstellung führbar ist.

2. Schließvorrichtung nach Anspruch 1, dadurch gekennzeichnet, daß der Entriegelungshebel (153; 353) mit dem Verriegelungszapfen (154; 354) über ein Getriebe (151; 156; 551, 556) verbunden ist.

3. Schließvorrichtung nach Anspruch 1, dadurch gekennzeichnet, daß der Entriegelungshebel (253) mit dem Verriegelungszapfen (254) direkt verbunden ist.

4. Schließvorrichtung nach einem der Ansprüche 1 bis 3, dadurch gekennzeichnet, daß das Getriebe aus einer Verriegelungsverzahnung (151; 551), die mit dem Entriegelungshebel (153; 553) verbunden ist, und einem Zahnkranz (156; 556), der mit dem Verriegelungszapfen (154; 554) verbunden ist, besteht.

5. Schließvorrichtung nach einem der Ansprüche 1 bis 4, dadurch gekennzeichnet, daß der Zahnkranz (156) als Zahnrad ausgebildet ist, das auf dem Verriegelungszapfen (154) angeordnet ist.

6. Schließvorrichtung nach einem der Ansprüche 1 bis 4, dadurch gekennzeichnet, daß der Zahnkranz (556) als Zahnradsegment ausgebildet ist, das am Verriegelungszapfen (554) angeordnet ist.

7. Schließvorrichtung nach einem der Ansprüche 1 bis 6, dadurch gekennzeichnet, daß die Verriegelungsverzahnung (151) ein Kreissegment mit einer Innenverzahnung ist, die Teil eines mit dem Entriegelungshebel (153) verbundenen Abdeckgehäuses (159) ist.

8. Schließvorrichtung nach einem der Ansprüche 1 bis 6, dadurch gekennzeichnet, daß die Verriegelungsverzahnung (551) ein Zahnradsegment ist, das in einem Drehpunkt des Schwenkkörpers (54) angeordnet ist.

9. Schließvorrichtung nach einem der Ansprüche 1 bis 8, dadurch gekennzeichnet, daß wenigstens eine Endstellung des Schwenkbügels (153; 353; 553) durch einen Anschlag (161, 162, 163, 164; 361) begrenzt ist.

10. Schließvorrichtung nach einem der Ansprüche 1 bis 9, dadurch gekennzeichnet, daß der Schwenkbügel (153; 353; 553) von einem ersten zu einem zweiten Anschlag (161, 162, 163, 164; 361) um 19° ausschwenkbar ist.
